(19) **Europäisches Patentamt**

**European Patent Office**

**Office européen des brevets**

(11) **EP 0 975 122 A1**

(12) **EUROPÄISCHE PATENTANMELDUNG**

(43) Veröffentlichungstag:
26.01.2000 Patentblatt 2000/04

(51) Int Cl.⁷: **H04L 12/24**, H04L 12/26, H04L 12/56

(21) Anmeldenummer: 99810649.6

(22) Anmeldetag: 19.07.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: 22.07.1998 CH 155198

(71) Anmelder: **Siemens Schweiz AG**
**8047 Zürich (CH)**

(72) Erfinder:
• **Nussbaumer, Iwan**
**4254 Liesberg-Dorf (CH)**
• **Zehnder, Charles**
**4102 Binningen (CH)**
• **Grabowski, Jens**
**23558 Lübeck (DE)**
• **Heymer, Stefan**
**23628 Klempau (DE)**
• **Hogrefe, Dieter**
**23627 Gr. Grönau (DE)**

(54) **Verfahren zum Ermitteln von Daten zum Erstellen eines Abbildes eines Netzes**

(57) Das Verfahren dient zum Ermitteln der Eigenschaften eines durch miteinander verbundene Vermittlungsknoten gebildeten Netzes, um ein Abbild des Netzes zu erzeugen. Einzelnen Vermittlungsknoten (A, C, D, F) sind Stimulatoren (ST1, ST2, ..., ) zugeordnet, die eine Verbindung zu einem einem Teilnehmer innerhalb des Netzwerkes initiieren können. Einzelnen Vermittlungsknoten (A, C, D, F) sind Beobachter (ST1, ST2, ... ) zugeordnet, die die am zugeordneten Vermittlungsknoten (A, C, D, F) vermittelten Verbindungen beobachten und aufzeichnen. Die von den Beobachtern (ST1, ST2, ... ) aufgezeichneten Verbindungsdaten werden je zu einer lokalen Sicht des Netzes zusammengefasst. Aus der lokalen Sichten der einzelnen Beobachter (ST1, ST2, ... ) wird eine globale Sicht des Netzes generiert um daraus ein Abbild des Netzes zu erstellen. Die Daten können z.B. zur Generierung eines Simulationsmodells des Netzes verwendet werden. Eine Anwendung des Verfahrens dient zum Erzeugen des Abbildes eines Fernmeldenetzes.

Fig. 1

**Beschreibung**

Die vorliegende Erfindung betrifft ein Verfahren nach dem Oberbegriff des Patentanspruchs 1.

Telekommunikationsnetze bestehen aus einer Vielzahl unterschiedlicher Netzkomponenten (Vermittlungsknoten, Verbindungsleitungen zwischen den Vermittlungsknoten etc.). Jede dieser Netzkomponenten trägt dabei mit ihren Eigenschaften, d.h. einerseits mit ihrer Struktur und andererseits mit ihrem "dynamischen" Verhalten sowie mit ihrem Zusammenwirken mit anderen Netzkomponenten zum Gesamtverhalten des Netzes bei. Wegen der in solchen Netzen vorhandenen Parallelität (mehrere gleichzeitig ablaufende Prozesse, wie z.B. bei gleichzeitiger Vermittlung von zwei Kommunikationsverbindungen über ein und denselben Knoten, insbesondere bei Überlastbetrieb) lässt sich jedoch das Gesamtverhalten des Netzes in bestimmten Situationen - wie z.B. bei der Wegesuche - nicht allein durch die Summe der Verhalten der einzelnen Komponenten hinreichend beschreiben. Eine Möglichkeit, zuverlässige Angaben über das Gesamtverhalten eines Kommunikationsnetzes zu erhalten, besteht darin, das Netz zu simulieren. Hierzu wird jedoch ein simulierbares Modell des Netzes benötigt. Dieses Modell erhält man beispielsweise dadurch, dass man die simulierbaren Verhaltensspezifikationen der einzelnen Komponenten entsprechend der Netzstruktur zu einer ausführbaren Gesamtspezifikation kombiniert.

Normalerweise stehen die Spezifikationen der Netzkomponenten nicht in einer simulierbaren Form zur Verfügung. Wenn aber die Komponenten bereits erfolgreich im Netz im Einsatz sind, kann das Verhalten einzelner Komponenten mittels spezieller Testgeräte lokal beobachtet und aufgezeichnet werden. Eine Erfassung und Beurteilung des Gesamtverhaltens des Netzes ist auf diese Weise jedoch nicht möglich.

In [1] ist ein Verfahren beschrieben, bei dem mittels in einem Netzwerk an bestimmten Knoten angeordneten Zählern der Verkehr registriert wird. Dabei werden Pakete der jeweils gleichen Quelle gezählt bis zu einer vorbestimmten Schwelle und aufgrund der weiteren statistischen Daten eine wahrscheinlichkeitsbehaftete Aussage gemacht, dass die betreffende Quelle direkt an ein Netzelement angeschlossen ist. Nachteilig ist, dass die Ergebnisse der Zählung vom Nutzverkehr abhängig sind und dadurch nicht alle möglichen Verkehrsbeziehungen erfasst werden können. Dieses Verfahren ist auf die paketorientierte Vermittlung beschränkt.

Der vorliegenden Erfindung liegt daher die Aufgabe zugrunde, ein für die paketorientierte und verbindungsorientierte Vermittlung anwendbares Verfahren zum Ermitteln von Daten eines Netzes anzugeben, durch das allein aus dem beobachteten Verhalten an einzelnen Knoten des betreffenden Netzes dessen Abbild erstellt werden kann, um mit diesem Abbild das reale Verhalten des Netzes simulieren und untersuchen zu können.

Diese Aufgabe wird durch die im kennzeichnenden Teil des Patentanspruchs 1 angegebenen Maßnahmen gelöst. Vorteilhafte Ausgestaltungen der Erfindung sind in weiteren Ansprüchen angegeben.

Das erfindungsgemässe Verfahren bietet folgende Vorteile:

-   Die für das Abbild des Netzes notwendigen Daten lassen sich mit einfachen Mitteln (z.B. D-Kanal-Protokoll-Analysator und Signalisiersystem Nr. 7 Protokoll-Analysator) ermitteln.

-   Ein aussagekräftiges Abbild des Netzes kann auf unterschiedlichen Abstraktionsebenen erzeugt werden, indem aus beobachtbaren Verbindungswegen bestimmte Aspekte (wie z.B. Verhalten bei Wegesuche, zeitliches Verhalten bei der Vermittlung von Verbindungen oder Wahrscheinlichkeit bei der Wegeauswahl) berücksichtigende Parameter vorgesehen sind und so eine spezifische Sicht des Netzes generiert werden kann.

-   Das Abbild des Netzes enthält die relevanten Eigenschaften (Struktur und Verhalten) des Netzes aus den beobachteten Verbindungswegen und der weiteren Parameter. Es steht somit ein Modell des beobachteten Netzes zur Verfügung, das beliebige Simulationen zulässt, mit denen das Verhalten des Netzes unter verschiedensten Bedingungen untersucht werden kann. Durch Implementierung der Spezifikationen von neuen Komponenten in das Abbild kann ein neues Abbild erzeugt werden, das wiederum durch Simulation analysierbar ist.

Die Erfindung wird nachfolgend anhand einer Zeichnung beispielsweise näher erläutert. Dabei zeigt:

Fig. 1        den prinzipiellen Ablauf des erfindungsgemässen Verfahrens;
Fig. 2        Struktur eines Netzes mit angeordneten Stimulatoren und Beobachtern
Fig. 3-6      bei der Durchführung des Verfahrens ermittelte lokale "Sichten" des Netzes
Fig. 7        eine globale Sicht des Netzes
Fig. 8        Anordnung der Stimulatoren und Beobachter bei einem Vermittlungsknoten eines Fernmeldenetzes

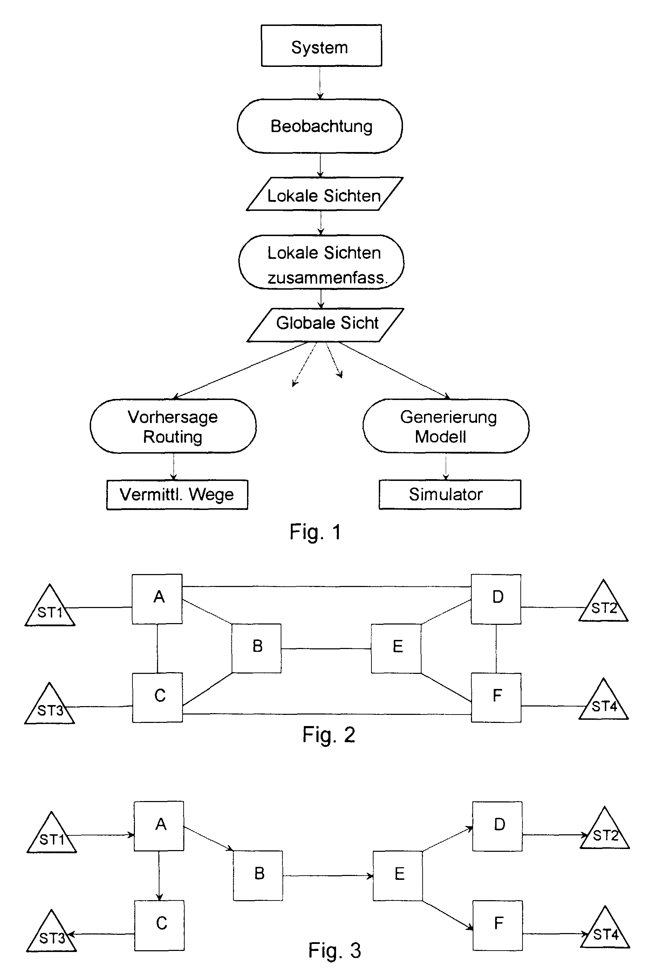

Fig. 1 zeigt in einem Datenflussdiagramm den prinzipiellen Ablauf des vorgeschlagenen Verfahrens. Ausgangspunkt des Verfahrens ist ein reales Netz, wie z.B. ein Fernmeldenetz oder ein Lokales Netz mit IP-Adressierung (Internetprotokoll). Stimulatoren führen bestimmte Zugriffe auf das Netz aus. Ein Zugriff ist beispielsweise der Versuch, eine Verbindung von einem Knoten (Vermittlungsknoten) des Netzes zu einem anderen Knoten des Netzes zu vermitteln. Die Vermittlung kann dabei verbindungsorientiert oder paketorientiert sein. Die Reaktionen des Netzes auf die Zugriffe werden an bestimmten Stellen des Netzes (z.B. Protokoll-Schnittstellen) beobachtet und in lokalen Sichten zusammengefasst und festgehalten. Dabei stellt eine lokale Sicht den Ausschnitt des Netzes dar, der für einen Beobachter aufgrund seiner Beobachtungen sichtbar ist.

Durch Zusammenführung der verschiedenen lokalen Sichten entsteht eine globale Sicht des Netzes, die das durch Versuche erkennbare Verhalten des Netzes enthält. Die globale Sicht des Netzes kann dann als Basis für eine Vielzahl von Anwendungen dienen. So kann daraus beispielsweise beim Aufbau einer bestimmten über das Netz verlaufenden Verbindung vorausgesagt werden, über welche Knoten die betreffende Verbindung verläuft, dies wird als Routing- oder Wegesuchverhalten bezeichnet.

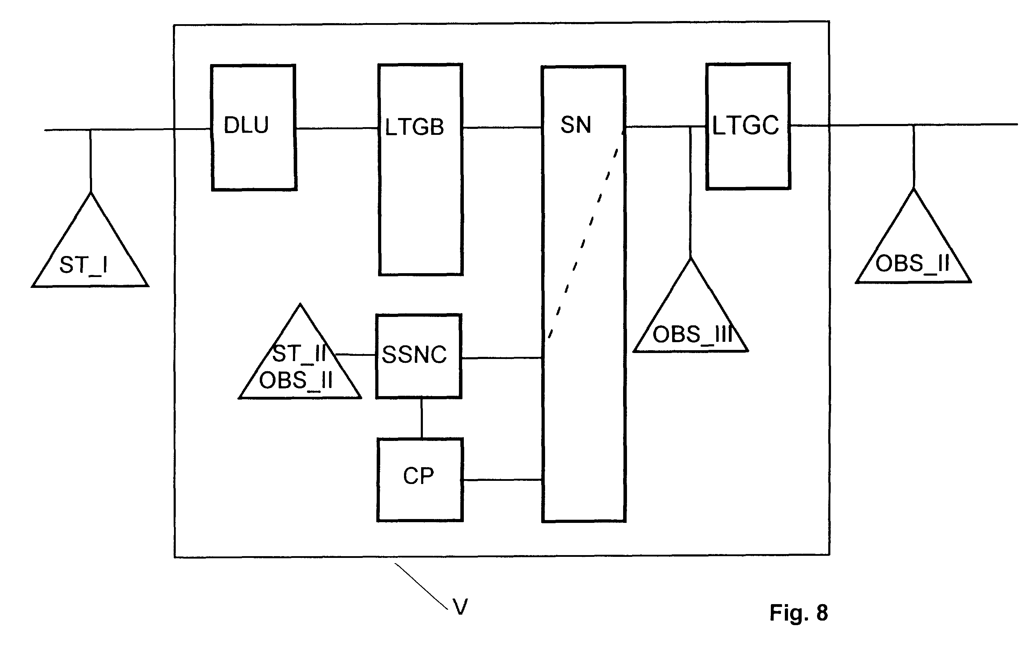

Anhand der Fig. 8 werden nun die Anschaltung der Stimulatoren und Beobachter bei einer Vermittlungsstelle V erläutert. Die Vermittlungsstelle V weist ein Koppelnetzwerk SN (Switching Network) auf, an das auf der sogenannten Netzseite ein Trunk-Modul LTGC (Line Trunk Group C) angeschlossen ist. Über dieses Trunk-Modul erfolgt mittels des Signalisiersystemes Nr. 7 die Ankopplung an eine andere Vermittlungsstelle V'. Die Übermittlung der Signalisierinformation erfolgt üblicherweise über eine PCM30-Strecke (Puls Code Modulation, 30 channels). Die Teilnehmer, z.B. ISDN-Endgeräte vorzugsweise mit den Diensten Data 64 kBit/s oder User-User-Signalling 1, sind über die Einheiten DLU (Digital Line Unit) und LTGB (Line Trunk Group B) an das Koppelnetzwerk SN angeschlossen. Die eigentliche Vermittlung wird vom Koordinationsprozessor CP (Coordination Processor) gesteuert. Die Auswertung und Umsetzung der Protokoll-Information auf der Netzseite wird in der Einheit SSNC (Signal System Network Control) vorgenommen.

Stimulatoren ST_I, ST_II sind Mittel oder Werkzeuge (z.B. Geräte oder Programme), die andere Teilnehmer des Netzwerkes mittels Aussenden einer Meldung oder mittels eines Verbindungsaufbaus adressieren können. Die dadurch ausgelösten Vorgänge können durch Beobachter $OBS_I$, OBS_II, OBS_III beobachtet werden. Vorteilhafterweise wird von den Stimulatoren entweder ein bestimmtes Kennzeichen (z.B. seine Adresse oder Rufnummer im Netz) in die Signalisierinformation mitgegeben. Es können auch noch zusätzliche Kennzeichen vorgesehen werden, für die allenfalls nicht normierte Ausprägungen im sogenannten Message Transfer Part (MTP) des Protokolls des Signalisiersystems Nr. 7 benutzt werden. Einzelheiten dazu können aus [4] gemäß den Abschnitten 6.3.1 bis 6.3.5 entnommen werden. Je nach dem, was beobachtet werden soll, werden unterschiedliche Arten von Stimulatoren eingesetzt. Im vorliegenden Beispiel haben die Stimulatoren ST_I, ST_II die Aufgabe, bestimmte über das Netz führende Verbindungen aufzubauen und dabei Beobachtungen bezüglich des Netzverhaltens durchzuführen. Hier ist der Stimulatoren ST_II ebenso auch Beobachter OBS_II, was aber nicht zwingend ist. Es ist ebenso auch möglich, auf der sogenannten Netzseite der betreffenden Vermittlungsstelle V eines Fernmeldenetzes Beobachter OBS_I oder OBS_III vorzusehen, die aufgrund den von einem anderen Stimulatoren einer anderen Vermittlungsstelle durchgeführten Verbindungsversuchen auftretende Ereignisse beobachten und entsprechende Daten sammeln. Die Beobachter OBS_I, OBS_III können als eigenständige Geräte auf der Netzseite angeschlossen werden oder als spezielle Programme $OBS_{II}$, $OBS_{III}$ in den Vermittlungsstellen V vorgesehen sein.

Das erfindungsgemässe Verfahren wird Anhand der Fig. 2 bis 7 erläutert, wo die Stimulatoren gleichzeitig auch als Beobachter wirken. Ausgangspunkt ist ein bestehendes Femmeldenetz mit einer Struktur gemäss der Fig. 2. Das Netz besteht aus sechs Vermittlungsstellen A, ..., F - im folgenden als Vermittlungsknoten oder als Knoten bezeichnet - die miteinander verbunden sind. Ferner sind vier Stimulatoren ST1, ..., ST4 vorgesehen, die über die Vermittlungsknoten A, B, C und F auf das Netz zugreifen können. Die Stimulatoren ST1, ..., ST4 haben weder Kenntnisse über die Netzstruktur noch über das Wegesuchverhalten des zu beobachtenden Netzes. Insbesondere kennen die Stimulatoren ST1, ..., ST4 die Anzahl der Vermittlungsknoten im Netz nicht. Zweck der von den Stimulatoren ST1, ..., ST4 ausgelösten Verbindungsversuche und der dabei gemachten Beobachtungen ist es, Daten über die tatsächliche Netzstruktur und der Routinglisten - d.h. des Wegesuchverhaltens in einem Vermittlungsknoten des Netz - zu erhalten.

Hierzu stellen die Stimulatoren ST1, ..., ST4 verschiedene Verbindungen untereinander her und zeichnen aus ihren lokalen Beobachtungen die Wege im Netz auf, über die die gewünschten Verbindungen tatsächlich zustande gekommen sind. Nebst dem hier beschriebenen einfachen Fall der Beobachtung der Wege sind auch komplexere Beoachtungen denkbar, wie z.B. die Dauer eines Verbindungsaufbaus oder die Dauer für die Übertragung von Signalen oder Informationspaketen. Im vorliegenden Fall sei angenommen, dass die von den Stimulatoren ST1, ..., ST4 initiierten Verbindungen zu folgenden Beobachtungsergebnissen geführt haben:

Tab. 1

| Von/nach | ST1 | ST2 | ST3 | ST4 |
|---|---|---|---|---|
| ST1 | -- | A>B>E>D | A>C | A>B>E>F |
| ST2 | D>E>B>A | -- | D>E>B>C | D>F |
| ST3 | C>A | C>F>D | -- | C>F |

Tab. 1   (fortgesetzt)

| Von/nach | ST1 | ST2 | ST3 | ST4 |
|----------|-----|-----|-----|-----|
| ST4 | F>D>A | F>E>D | F>E>B>C | -- |

Eine Zeile der Tab.1 beschreibt jeweils die Versuchsergebnisse, die vom betreffenden Stimulator beobachtet wurden. Es handelt sich also um lokale Beobachtungen desjenigen Stimulators, der den Aufbau einer Verbindung versucht hat. So bedeutet der Eintrag D>E>B>A in Zeile 2 und Spalte 1, dass bei einem Verbindungsaufbau vom Stimulator ST2 zum Stimulator ST1 der Stimulator ST2 den Aufbau einer Verbindung beobachtet hat, die über die Vermittlungsknoten D, E, B und A verläuft.

Für die folgenden Darstellungen des Verfahrens wird eine Notation verwendet, die der Quantentheorie entlehnt ist. Für eine tiefergehende Übersicht wird auf [2] verwiesen und hier nur die Schreibweisen wiederholt, die für das Verständnis des Folgenden wichtig sind.

Grundlage bildet eine orthogonale (manchmal auch normalisierte) Menge von Basisvektoren $B$, die mit komplexen Skalaren gewichtet einen Vektorraum $|V\rangle$ aufspannen. Dieser Vektorraum weist einen Nullvektor $\mathbf{0}$ auf, und in ihm gelten die folgenden algebraischen Gesetze:

$$|\psi\rangle + |\chi\rangle = |\chi\rangle + |\psi\rangle$$

$$(|\varphi\rangle + |\phi\rangle) + |\chi\rangle = |\varphi\rangle + (|\phi\rangle + |\chi\rangle)$$

$$(z+w)|\varphi\rangle = z|\varphi\rangle + w|\varphi\rangle$$

$$z(|\varphi\rangle + |\chi\rangle) = z|\varphi\rangle + z|\chi\rangle$$

$$|\varphi\rangle z = z|\varphi\rangle$$

$$z(w|\varphi\rangle) = (zw)|\varphi\rangle$$

$$1|\varphi\rangle = |\varphi\rangle$$

$$0|\varphi\rangle = 0$$

$$z0 = 0$$

Dabei sind $z, w$ komplexe Zahlen.

Zusätzlich zu diesem Vektorraum $|V\rangle$ betrachtet man den adjunkten Vektorraum $\langle V|$ mit gleicher Basis, dessen Gesetze analog lauten.

Zusätzlich zu den genannten Gesetzen werden Forderungen an das Zusammenspiel zwischen den beiden Vektorräumen $|V\rangle$ und $\langle V|$ erhoben. Dies sind die sogenannte Orthogonalitätsbedingung

$$\langle i | j \rangle = \begin{cases} 1 & i = j \\ 0 & \text{sonst,} \end{cases}$$

für $i \in B, j \in B$ und die sogenannte Projektionsbedingung

$$\Sigma_i |i\rangle\langle i| = 1$$

mit *1* als Einheitssymbol. Kompliziertere Versuchsanordnungen (sogenannte allgemeine Apparate) der Quantentheorie werden durch komplexwertige Matrizen

$$A = \begin{pmatrix} \langle 1|A|1\rangle & \langle 1|A|2\rangle & \cdots & \langle 1|A|n\rangle \\ \langle 2|A|1\rangle & \langle 2|A|2\rangle & & \langle 2|A|n\rangle \\ \vdots & & \ddots & \vdots \\ \langle n|A|1\rangle & \langle n|A|2\rangle & \cdots & \langle n|A|n\rangle \end{pmatrix}$$

dargestellt, die Hintereinanderschaltung zweier allgemeiner Apparate wird damit zur Matrixmultiplikation. Da solche Matrizen aber für eine algebraische Darstellung eher hinderlich sind, werden an ihrer Stelle sogenannte Dichtematrizen verwendet, die algebraische Darstellung eines Automaten lautet damit

$$A = \sum_{i,j \in B} |i\rangle\langle i|A|j\rangle\langle j| = \sum_{i,j \in B} \langle i|A|j\rangle \cdot |i\rangle\langle j|$$

wobei *B* wieder die Basiszustände des Systems beschreibt.

Betrachtet man nun die oben angeführten algebraischen Gesetze, die im von den Basisvektoren aufgespannten Vektorraum der Dimension n gelten, erkennt man, daß die Skalare keineswegs komplexe Zahlen sein müssen. Vielmehr kann man an ihrer Stelle die Elemente eines beliebigen Halbrings verwenden, also einer mathematischen Struktur (*M*,+,·,0,1), die den folgenden Gesetzen gehorcht, Einzelheiten sind in [3] enthalten.

$$(a + b) + c = a + (b + c)$$

$$(a \cdot b) \cdot c = a \cdot (b \cdot c)$$

$$a + b = b + a$$

$$a + 0 = 0 + a = a$$

$$a \cdot 1 = 1 \cdot a = a$$

$$a \cdot (b + c) = a \cdot b + a \cdot c$$

$$(a + b) \cdot c = a \cdot c + b \cdot c$$

$$0 \cdot a = a \cdot 0 = 0$$

Die aus der Theorie der formalen Sprachen bekannte Menge der regulären Sprachen *REG*($\Sigma^*$) über dem freien Monoid $\Sigma^*$ zum Alphabet $\Sigma$ bildet zusammen mit Konkatenation und Alternativenbildung und den Elementen **0**, der leeren Sprache, und **1**, der Sprache, die nur das leere Wort enthält, gerade einen solchen Halbring. Daher werden für verwendeten Dichtematrizen die Elemente dieses Halbringes als skalare Werte verwendet. Im gleichen Zuge muss auch die Definition der quantentheoretischen Operatoren leicht abgeändert werden, um sie an diesen neuen Halbring anzupassen. Hierzu wird verlangt, daß für die Basis $B = \{v_1, v_2, v_3,...\}$ eines Vektorraums $|V\rangle$ gilt

$$\Sigma_{v \in B} |v\rangle\langle v|$$

und

$$\langle v_i | v_j \rangle = \begin{cases} \mathbf{1}, & \text{falls } i = j \\ \mathbf{0}, & \text{sonst} \end{cases}$$

gilt, wobei **1** die Sprache ist, die nur das leere Wort enthält, und **0** die leere Sprache $\varnothing$. Für Elemente des Alphabets $\Sigma$ wird $a$ anstelle der Sprache $\{a\}$ verwendet, wie dies in der Theorie der formalen Sprachen gebräuchlich ist.

Aus den lokalen Beobachtungen werden nun die lokalen Sichten der einzelnen Stimulatoren gewonnen. Die lokalen Sichten geben hier nicht nur Aufschluss über die Verbindungsstruktur des Netzes, sondern sie enthalten auch Informationen über das Routingverhalten der einzelnen Vermittlungsknoten. Hierzu werden die beobachteten Verbindungen zuerst in Dichtematrizen für die einzelnen Verbindungen codiert. Die Beobachtungen haben die Form

$$N_0 \to N_1 \to N_2 \to \cdots \to N_m, \qquad m \in \mathrm{N}$$

wobei die $N_i$, $1 \leq i \leq m$, für die Namen von Vermittlungsknoten stehen sollen. Zur Codierung werden Tupel von $(N_i, N_j)$ von Vermittlungsknotennamen verwendet. Dabei soll $(N_i, N_j)$ bedeuten, daß eine Verbindung vom Vermittlungsknoten $N_i$ zum Vermittlungsknoten $N_j$ des Wegs gesucht wird. Werden diese Tupel als Basisvektoren verwendet, kann eine gemachte Beobachtung damit in einer Dichtematrix

$$
\begin{aligned}
\mathbf{B} \quad = \quad & N_1 \big|(N_1, N_m)\big\rangle\big\langle(N_0, N_m)\big| + N_2 \big|(N_2, N_m)\big\rangle\big\langle(N_1, N_m)\big| + \ldots \\
& + N_{i+1} \big|(N_{i+1}, N_m)\big\rangle\big\langle(N_i, N_m)\big| + \ldots + N_m \big|(N_m, N_m)\big\rangle\big\langle(N_{m-1}, N_m)\big| \\
= \quad & \sum_{i=0}^{m-1} N_{i+1} \big|(N_{i+1}, N_m)\big\rangle\big\langle(N_i, N_m)\big|
\end{aligned}
$$

zusammengefaßt werden. Mehrere solche Beobachtungen $\mathbf{B}_1,...,\mathbf{B}_k$ können dann in einer gesamten lokalen Dichtematrix

$$\mathrm{D}_{N_0} = \mathrm{B}_1 + \mathrm{B}_2 + ... + \mathrm{B}_k$$

des Vermittlungsknotens $N_0$ zusammengefaßt werden. Diese lokalen Dichtematrizen können dann wiederum durch Summation in einer globalen Dichtematrix zusammengefaßt werden.

Für den Stimulator ST1 ergeben sich die Beobachtungen:

$$\mathrm{R}_{1,2} = A|(A,2)\rangle\langle(1,2)| + B|(B,2)\rangle\langle(A,2)| + E|(E,2)\rangle\langle(B,2)| +$$

$$D|(D,2)\rangle\langle(E,2)| + 2|(2,2)\rangle\langle(D,2)|$$

$$\mathrm{R}_{1,3} = A|(A,3)\rangle\langle(1,3)| + C|(C,3)\rangle\langle(A,3)| + 3|(3,3)\rangle\langle(C,3)|$$

$$\mathrm{R}_{1,4} = A|(A,4)\rangle\langle(1,4)| + B|(B,4)\rangle\langle(A,4)| + E|(E,4)\rangle\langle(B,4)| +$$

$$F|(F,4)\rangle\langle(E,4)| + 4|(4,4)\rangle\langle(F,4)|$$

Für die Bildung der lokalen Sicht werden die Matrizen für die einzelnen beobachteten Routen formal aufsummiert:

$$D_1 \quad = \quad R_{1,2} + R_{1,3} + R_{1,4}$$

$$
\begin{aligned}
= \quad & (A|(A,2)\rangle\langle(1,2)| + B|(B,2)\rangle\langle(A,2)| + E|(E,2)\rangle\langle(B,2)| + \\
& D|(D,2)\rangle\langle(E,2)| + 2|(2,2)\rangle\langle(D,2)|) + \\
& (A|(A,3)\rangle\langle(1,3)| + C|(C,3)\rangle\langle(A,3)| + 3|(3,3)\rangle\langle(C,3)|) + \\
& (A|(A,4)\rangle\langle(1,4)| + B|(B,4)\rangle\langle(A,4)| + E|(E,4)\rangle\langle(B,4)| + \\
& F|(F,4)\rangle\langle(E,4)| + 4|(4,4)\rangle\langle(F,4)|) \\
= \quad & A|(A,2)\rangle\langle(1,2)| + B|(B,2)\rangle\langle(A,2)| + E|(E,2)\rangle\langle(B,2)| + \\
& D|(D,2)\rangle\langle(E,2)| + 2|(2,2)\rangle\langle(D,2)| + A|(A,3)\rangle\langle(1,3)| + \\
& C|(C,3)\rangle\langle(A,3)| + 3|(3,3)\rangle\langle(C,3)| + A|(A,4)\rangle\langle(1,4)| + \\
& B|(B,4)\rangle\langle(A,4)| + E|(E,4)\rangle\langle(B,4)| + F|(F,4)\rangle\langle(E,4)| + \\
& 4|(4,4)\rangle\langle(F,4)|
\end{aligned}
$$

Die so bestimmte Dichtematrix $D_1$ enthält das gesamte "Wissen" des Stimulators (und Beobachters) ST1. Bei gleichzeitiger Reduktion des Informationsgehaltes kann die in der Dichtematrix $D_1$ enthaltene Information auch in Form einer Verbindungsstruktur (enthält die in $D_1$ codierte Konnektivitätsinformation) sowie in einer Reihe von Routingtabellen (enthält die in $D_1$ enthaltenen dynamischen Aspekte) angegeben werden.

Im Folgenden werden diese Informationen jeweils gleichberechtigt zur Dichtematrix angeben. Dies ist im hier präsentierten Falle zulässig, weil im gegebenen Beispiel ausschließlich auf diese Informationen - Verbindungsstruktur und Routingverhalten des Netzes - benutzt werden. Falls andere Parameter beobachtet werden, und diese damit in das Modell einfließen, können andere Darstellungsweisen (bei gleichzeitiger nur marginaler Änderung der Trägermengen für die Skalarwerte) verwendet werden.

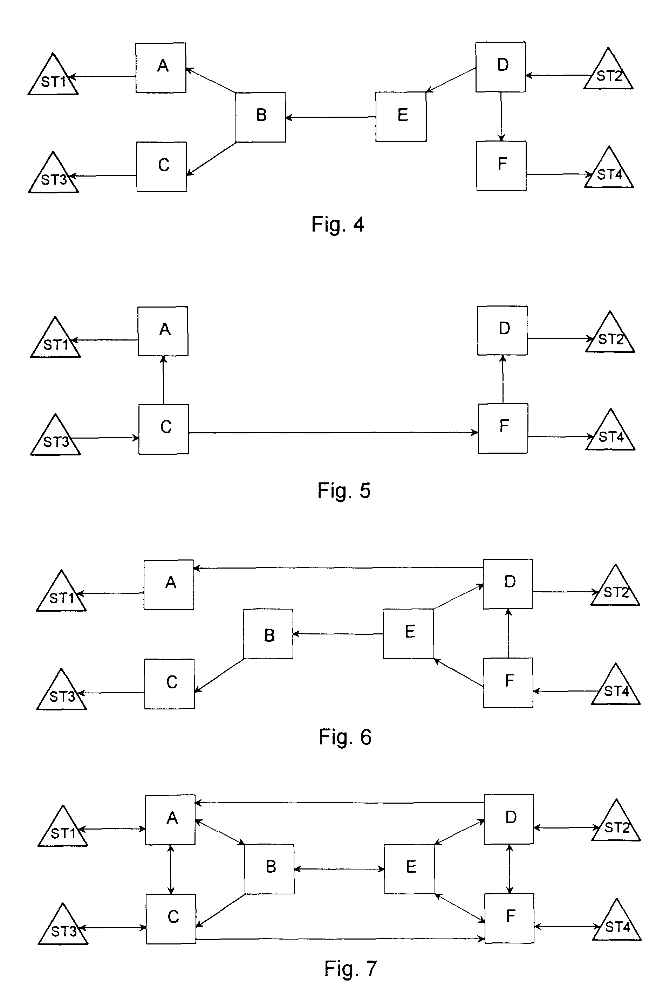

Für den Stimulator ST1 ergibt sich aus den Informationen aus Tab. 1 die in Fig.3 und in nachstehender Tabelle 2 dargestellte lokale Sicht auf das Verhalten des Netzes bei der Wegeauswahl beim Aufbau von Verbindungen. Fig. 3 stellt die vom Stimulator ST1 aus sichtbare Verbindungsstruktur des Netzes dar, während aus Tab. 2 die Routinglisten der sechs Vermittlungsknoten A, ..., F mit den Angaben zur Durchschaltung einer Verbindung ersichtlich sind.

| A | | B | | C | | D | | E | | F | |
|---|---|---|---|---|---|---|---|---|---|---|---|
| 2 | B | 2 | E | 3 | 3 | 2 | 2 | 2 | D | 4 | 4 |
| 3 | C | 4 | E | | | | | 4 | F | | |
| 4 | B | | | | | | | | | | |

Tab.2

Die in Tab.2 dargestellten Routinglisten sind so zu lesen, dass z.B. der Eintrag in der mit 2 beschrifteten Zeile im Teil E der Tabelle bedeutet, dass im Knoten E eine Verbindung, die zum Stimulator ST2 führen soll, von diesem Knoten E aus zum Vermittlungsknoten D fortgesetzt wird. Die vom Stimulator ST1 aus sichtbare Verbindungsstruktur des Netzes zeigt, dass nur gerichtete Verbindungen - wie etwa die Verbindung vom Knoten B zum Knoten E - beobachtet wurden. Im vorliegenden Fall können aus den Beobachtung Vermittlungsknoten des Stimulators ST1 keine Informationen über die Bidirektionalität dieser Verbindungen entnommen werden.

Für den Stimulator ST2 kann in gleicher Weise aus den in Tab. 1 enthaltenen Informationen die in Fig.4 und in nachstehender Tab.3 dargestellte lokale Sicht ermittelt werden.

| A | | B | | C | | D | | E | | F | |
|---|---|---|---|---|---|---|---|---|---|---|---|
| 1 | 1 | 1 | A | 3 | 3 | 1 | E | 1 | B | 4 | 4 |
| | | 3 | C | | | 3 | E | 3 | B | | |
| | | | | | | 4 | F | | | | |

Tab.3

Analog zum für den Stimulator ST1 gezeigten Verfahren ergibt sich die lokale Dichtematrix $\mathbf{D}_2$ durch Summation der Dichtematrizen für die laut Tab. 1 beobachteten Routen

$$R_{2,1} = D|(D,1)\rangle\langle(2,1)| + E|(E,1)\rangle\langle(D,1)| + B|(B,1)\rangle\langle(E,1)| +$$

$$A|(A,1)\rangle\langle(B,1)| + 1|(1,1)\rangle\langle(A,1)|$$

$$R_{2,3} = D|(D,3)\rangle\langle(2,3)| + E|(E,3)\rangle\langle(D,3)| + B|(B,3)\rangle\langle(E,3)| +$$

$$C|(C,3)\rangle\langle(B,3)| + 3|(3,3)\rangle\langle(C,3)|$$

$$R_{2,4} = D|(D,4)\rangle\langle(2,4)| + F|(F,4)\rangle\langle(D,4)| + 4|(4,4)\rangle\langle(F,4)|$$

als

$$
\begin{aligned}
\mathbf{D}_2 \;=\;& \mathbf{R}_{2,1} + \mathbf{R}_{2,3} + \mathbf{R}_{2,4}\\
=\;& \big(D|(D,1)\rangle\langle(2,1)| + E|(E,1)\rangle\langle(D,1)| + B|(B,1)\rangle\langle(E,1)| +\\
& A|(A,1)\rangle\langle(B,1)| + 1|(1,1)\rangle\langle(A,1)|\big) +\\
& \big(D|(D,3)\rangle\langle(2,3)| + E|(E,3)\rangle\langle(D,3)| + B|(B,3)\rangle\langle(E,3)| +\\
& C|(C,3)\rangle\langle(B,3)| + 3|(3,3)\rangle\langle(C,3)|\big) +\\
& \big(D|(D,4)\rangle\langle(2,4)| + F|(F,4)\rangle\langle(D,4)| + 4|(4,4)\rangle\langle(F,4)|\big)\\
=\;& D|(D,1)\rangle\langle(2,1)| + E|(E,1)\rangle\langle(D,1)| + B|(B,1)\rangle\langle(E,1)| +\\
& A|(A,1)\rangle\langle(B,1)| + 1|(1,1)\rangle\langle(A,1)| + D|(D,3)\rangle\langle(2,3)| +\\
& E|(E,3)\rangle\langle(D,3)| + B|(B,3)\rangle\langle(E,3)| + C|(C,3)\rangle\langle(B,3)| +\\
& 3|(3,3)\rangle\langle(C,3)| + D|(D,4)\rangle\langle(2,4)| + F|(F,4)\rangle\langle(D,4)| +\\
& 4|(4,4)\rangle\langle(F,4)|.
\end{aligned}
$$

Fig.4 zeigt, dass der Stimulator ST2 eine Verbindungsstruktur des Netzes feststellt, die symmetrisch zu der Verbindungsstruktur ist, die der Stimulator ST1 beobachten kann. Diese Tatsache erklärt sich aus den Daten von Tab. 1. Wären hier andere Ergebnisse ermittelt worden, hätte dies nicht zwingend zu einer Symmetrie der Verbindungsstrukturen geführt.

Für den Stimulator ST3 werden wieder zuerst die Dichtematrizen für die beobachteten Verbindungen

$$R_{3,1} = C|(C,1)\rangle\langle(3,1)| + A|(A,1)\rangle\langle(C,1)| + 1|(1,1)\rangle\langle(A,1)|$$

$$R_{3,2} = C|(C,2)\rangle\langle(3,2)| + F|(F,2)\rangle\langle(C,2)| + D|(D,2)\rangle\langle(F,2)| +$$

$$2|(2,2)\rangle\langle(D,2)|$$

$$R_{3,4} = C|(C,4)\rangle\langle(3,4)| + F|(F,4)\rangle\langle(C,4)| + 4|(4,4)\rangle\langle(F,4)|$$

aufgestellt, bevor diese ihrerseits zur lokalen Sicht des Stimulators ST3 zusammengefaßt werden:

$$
\begin{aligned}
D_3 \;=\; & R_{3,1} + R_{3,2} + R_{3,4} \\
=\; & \big(C|(C,1)\rangle\langle(3,1)| + A|(A,1)\rangle\langle(C,1)| + 1|(1,1)\rangle\langle(A,1)|\big) + \\
& \big(C|(C,2)\rangle\langle(3,2)| + F|(F,2)\rangle\langle(C,2)| + D|(D,2)\rangle\langle(F,2)| + \\
& 2|(2,2)\rangle\langle(D,2)|\big) + \\
& \big(C|(C,4)\rangle\langle(3,4)| + F|(F,4)\rangle\langle(C,4)| + 4|(4,4)\rangle\langle(F,4)|\big) \\
=\; & C|(C,1)\rangle\langle(3,1)| + A|(A,1)\rangle\langle(C,1)| + 1|(1,1)\rangle\langle(A,1)| + \\
& C|(C,2)\rangle\langle(3,2)| + F|(F,2)\rangle\langle(C,2)| + D|(D,2)\rangle\langle(F,2)| + \\
& 2|(2,2)\rangle\langle(D,2)| + C|(C,4)\rangle\langle(3,4)| + F|(F,4)\rangle\langle(C,4)| + \\
& 4|(4,4)\rangle\langle(F,4)|
\end{aligned}
$$

Ebenso kann für den Stimulator ST3 die in Fig.5 und Tab. 4 dargestellte lokale Sicht des Netzverhaltens bestimmt werden.

| A | | C | | D | | F | |
|---|---|---|---|---|---|---|---|
| 1 | 1 | 1 | A | 2 | 2 | 2 | D |
|   |   | 2 | F |   |   | 4 | 4 |
|   |   | 4 | F |   |   |   |   |

Tab.4

In diesem Fall ist festzustellen, dass der Stimulator ST3 die Existenz der Vermittlungsknoten B und E nicht wahrnimmt. Dies wird wiederum aus den entsprechenden Daten von Tab. 1 deutlich, denn in den vom Stimulator ST3 beobachteten Verbindungswegen spielen die Vermittlungsknoten B und E keine Rolle.

Schließlich kann noch die lokale Sicht des Stimulators ST4 gemäß Fig. 6 und Tab. 5 ermittelt und festgehalten werden.

| A | | B | | C | | D | | E | | F | |
|---|---|---|---|---|---|---|---|---|---|---|---|
| 1 | 1 | 3 | C | 3 | 3 | 1 | A | 2 | D | 1 | D |
|   |   |   |   |   |   | 2 | 2 | 3 | B | 2 | E |
|   |   |   |   |   |   |   |   |   |   | 3 | E |

Tab. 5

Die in Fig. 4 und Tab. 5 dargestellten Daten ergeben sich wieder durch Summation der Dichtematrizen für die beobachteten Routen

$$R_{4,1} = F|(F,1)\rangle\langle(4,1)| + D|(D,1)\rangle\langle(F,1)| + A|(A,1)\rangle\langle(D,1)| +$$

$$1|(1,1)\rangle\langle(A,1)|$$

$$R_{4,2} = F|(F,2)\rangle\langle(4,2)| + E|(E,2)\rangle\langle(F,2)| + D|(D,2)\rangle\langle(E,2)| +$$

$$2|(2,2)\rangle\langle(D,2)|$$

$$R_{4,3} = F|(F,3)\rangle\langle(4,3)| + E|(E,3)\rangle\langle(F,3)| + B|(B,3)\rangle\langle(E,3)| +$$

$$C|(C,3)\rangle\langle(B,3)| + 3|(3,3)\rangle\langle(C,3)|$$

zur die lokale Sicht des Stimulators ST4 beschreibenden Dichtematrix

$$
\begin{aligned}
D_4 \quad = \quad & R_{4,1} + R_{4,2} + R_{4,3} \\
= \quad & (F|(F,1)\rangle\langle(4,1)| + D|(D,1)\rangle\langle(F,1)| + A|(A,1)\rangle\langle(D,1)| + \\
& 1|(1,1)\rangle\langle(A,1)|) + \\
& (F|(F,2)\rangle\langle(4,2)| + E|(E,2)\rangle\langle(F,2)| + D|(D,2)\rangle\langle(E,2)| + \\
& 2|(2,2)\rangle\langle(D,2)|) + \\
& (F|(F,3)\rangle\langle(4,3)| + E|(E,3)\rangle\langle(F,3)| + B|(B,3)\rangle\langle(E,3)| + \\
& C|(C,3)\rangle\langle(B,3)| + 3|(3,3)\rangle\langle(C,3)|) \\
= \quad & F|(F,1)\rangle\langle(4,1)| + D|(D,1)\rangle\langle(F,1)| + A|(A,1)\rangle\langle(D,1)| + \\
& 1|(1,1)\rangle\langle(A,1)| + F|(F,2)\rangle\langle(4,2)| + E|(E,2)\rangle\langle(F,2)| + \\
& D|(D,2)\rangle\langle(E,2)| + 2|(2,2)\rangle\langle(D,2)| + F|(F,3)\rangle\langle(4,3)| + \\
& E|(E,3)\rangle\langle(F,3)| + B|(B,3)\rangle\langle(E,3)| + C|(C,3)\rangle\langle(B,3)| + \\
& 3|(3,3)\rangle\langle(C,3)|.
\end{aligned}
$$

Die verschiedenen lokalen Sichten der vier Stimulatoren ST1, ..., ST4 werden nun zu einer globalen Sicht des Netzes zusammengeführt, die das aus den Verbindungsversuchen der Stimulatoren gefundene Verhalten des Netzes beschreibt. Formal geschieht dies, indem die Dichtematrizen $D_1$, $D_2$, $D_3$ und $D_4$ durch Summation zur globalen Dichtematrix

$$D = D_1 + D_2 + D_3 + D_4$$

$$
\begin{aligned}
= &\big(A|(A,2)\rangle\langle(1,2)| + B|(B,2)\rangle\langle(A,2)| + E|(E,2)\rangle\langle(B,2)| + \\
&D|(D,2)\rangle\langle(E,2)| + 2|(2,2)\rangle\langle(D,2)| + A|(A,3)\rangle\langle(1,3)| + \\
&C|(C,3)\rangle\langle(A,3)| + 3|(3,3)\rangle\langle(C,3)| + A|(A,4)\rangle\langle(1,4)| + \\
&B|(B,4)\rangle\langle(A,4)| + E|(E,4)\rangle\langle(B,4)| + F|(F,4)\rangle\langle(E,4)| + \\
&4|(4,4)\rangle\langle(F,4)|\big) + \\
&\big(D|(D,1)\rangle\langle(2,1)| + E|(E,1)\rangle\langle(D,1)| + B|(B,1)\rangle\langle(E,1)| + \\
&A|(A,1)\rangle\langle(B,1)| + 1|(1,1)\rangle\langle(A,1)| + D|(D,3)\rangle\langle(2,3)| + \\
&E|(E,3)\rangle\langle(D,3)| + B|(B,3)\rangle\langle(E,3)| + C|(C,3)\rangle\langle(B,3)| + \\
&3|(3,3)\rangle\langle(C,3)| + D|(D,4)\rangle\langle(2,4)| + F|(F,4)\rangle\langle(D,4)| + \\
&4|(4,4)\rangle\langle(F,4)|\big) + \\
&\big(C|(C,1)\rangle\langle(3,1)| + A|(A,1)\rangle\langle(C,1)| + 1|(1,1)\rangle\langle(A,1)| + \\
&C|(C,2)\rangle\langle(3,2)| + F|(F,2)\rangle\langle(C,2)| + D|(D,2)\rangle\langle(F,2)| + \\
&2|(2,2)\rangle\langle(D,2)| + C|(C,4)\rangle\langle(3,4)| + F|(F,4)\rangle\langle(C,4)| + \\
&4|(4,4)\rangle\langle(F,4)|\big) + \\
&\big(F|(F,1)\rangle\langle(4,1)| + D|(D,1)\rangle\langle(F,1)| + A|(A,1)\rangle\langle(D,1)| + \\
&1|(1,1)\rangle\langle(A,1)| + F|(F,2)\rangle\langle(4,2)| + E|(E,2)\rangle\langle(F,2)| + \\
&D|(D,2)\rangle\langle(E,2)| + 2|(2,2)\rangle\langle(D,2)| + F|(F,3)\rangle\langle(4,3)| + \\
&E|(E,3)\rangle\langle(F,3)| + B|(B,3)\rangle\langle(E,3)| + C|(C,3)\rangle\langle(B,3)| + \\
&3|(3,3)\rangle\langle(C,3)|\big)
\end{aligned}
$$

$$= A|(A,2)\rangle\langle(1,2)| + B|(B,2)\rangle\langle(A,2)| + E|(E,2)\rangle\langle(B,2)| +$$
$$D|(D,2)\rangle\langle(E,2)| + 2|(2,2)\rangle\langle(D,2)| + A|(A,3)\rangle\langle(1,3)| +$$
$$C|(C,3)\rangle\langle(A,3)| + 3|(3,3)\rangle\langle(C,3)| + A|(A,4)\rangle\langle(1,4)| +$$
$$B|(B,4)\rangle\langle(A,4)| + E|(E,4)\rangle\langle(B,4)| + F|(F,4)\rangle\langle(E,4)| +$$
$$4|(4,4)\rangle\langle(F,4)| + D|(D,1)\rangle\langle(2,1)| + E|(E,1)\rangle\langle(D,1)| +$$
$$B|(B,1)\rangle\langle(E,1)| + A|(A,1)\rangle\langle(B,1)| + 1|(1,1)\rangle\langle(A,1)| +$$
$$D|(D,3)\rangle\langle(2,3)| + E|(E,3)\rangle\langle(D,3)| + B|(B,3)\rangle\langle(E,3)| +$$
$$C|(C,3)\rangle\langle(B,3)| + 3|(3,3)\rangle\langle(C,3)| + D|(D,4)\rangle\langle(2,4)| +$$
$$F|(F,4)\rangle\langle(D,4)| + 4|(4,4)\rangle\langle(F,4)| + C|(C,1)\rangle\langle(3,1)| +$$
$$A|(A,1)\rangle\langle(C,1)| + 1|(1,1)\rangle\langle(A,1)| + C|(C,2)\rangle\langle(3,2)| +$$
$$F|(F,2)\rangle\langle(C,2)| + D|(D,2)\rangle\langle(F,2)| + 2|(2,2)\rangle\langle(D,2)| +$$
$$C|(C,4)\rangle\langle(3,4)| + F|(F,4)\rangle\langle(C,4)| + 4|(4,4)\rangle\langle(F,4)| +$$
$$F|(F,1)\rangle\langle(4,1)| + D|(D,1)\rangle\langle(F,1)| + A|(A,1)\rangle\langle(D,1)| +$$
$$1|(1,1)\rangle\langle(A,1)| + F|(F,2)\rangle\langle(4,2)| + E|(E,2)\rangle\langle(F,2)| +$$
$$D|(D,2)\rangle\langle(E,2)| + 2|(2,2)\rangle\langle(D,2)| + F|(F,3)\rangle\langle(4,3)| +$$
$$E|(E,3)\rangle\langle(F,3)| + B|(B,3)\rangle\langle(E,3)| + C|(C,3)\rangle\langle(B,3)| +$$
$$3|(3,3)\rangle\langle(C,3)|$$

$$= A|(A,2)\rangle\langle(1,2)| + B|(B,2)\rangle\langle(A,2)| + E|(E,2)\rangle\langle(B,2)| +$$
$$D|(D,2)\rangle\langle(E,2)| + 2|(2,2)\rangle\langle(D,2)| + A|(A,3)\rangle\langle(1,3)| +$$
$$C|(C,3)\rangle\langle(A,3)| + 3|(3,3)\rangle\langle(C,3)| + A|(A,4)\rangle\langle(1,4)| +$$
$$B|(B,4)\rangle\langle(A,4)| + E|(E,4)\rangle\langle(B,4)| + F|(F,4)\rangle\langle(E,4)| +$$
$$4|(4,4)\rangle\langle(F,4)| + D|(D,1)\rangle\langle(2,1)| + E|(E,1)\rangle\langle(D,1)| +$$
$$B|(B,1)\rangle\langle(E,1)| + A|(A,1)\rangle\langle(B,1)| + 1|(1,1)\rangle\langle(A,1)| +$$
$$D|(D,3)\rangle\langle(2,3)| + E|(E,3)\rangle\langle(D,3)| + B|(B,3)\rangle\langle(E,3)| +$$
$$C|(C,3)\rangle\langle(B,3)| + D|(D,4)\rangle\langle(2,4)| + F|(F,4)\rangle\langle(D,4)| +$$
$$C|(C,1)\rangle\langle(3,1)| + A|(A,1)\rangle\langle(C,1)| + C|(C,2)\rangle\langle(3,2)| +$$
$$F|(F,2)\rangle\langle(C,2)| + D|(D,2)\rangle\langle(F,2)| + C|(C,4)\rangle\langle(3,4)| +$$
$$F|(F,4)\rangle\langle(C,4)| + F|(F,1)\rangle\langle(4,1)| + D|(D,1)\rangle\langle(F,1)| +$$
$$A|(A,1)\rangle\langle(D,1)| + F|(F,2)\rangle\langle(4,2)| + E|(E,2)\rangle\langle(F,2)| +$$
$$F|(F,3)\rangle\langle(4,3)| + E|(E,3)\rangle\langle(F,3)|$$

zusammengefaßt werden.

Die aus der Zusammenführung der lokalen Sichten gefundene Netzstruktur ist in Fig.7 dargestellt. Das Routingverhalten ist in Tab. 6 zusammengefasst.

| A | | B | | C | | D | | E | | F | |
|---|---|---|---|---|---|---|---|---|---|---|---|
| 1 | 1 | 1 | A | 1 | A | 1 | A,E | 1 | B | 1 | D |
| 2 | B | 2 | E | 2 | F | 2 | 2 | 2 | D | 2 | D,E |
| 3 | C | 3 | C | 3 | 3 | 3 | E | 3 | B | 3 | E |
| 4 | B | 4 | E | 4 | F | 4 | F | 4 | F | 4 | 4 |

Tab.6

Bei Betrachtung der Routinglisten von Tab.6 stellt man fest, dass an zwei Stellen keine eindeutige Bevorzugung für den zu wählenden Verbindungsweg enthalten ist. Dies betrifft die Wahl des Weges zum Stimulator ST1 am Vermittlungsknoten D und die Wahl des Weges zum Stimulator ST2 am Vermittlungsknoten F. In beiden Fällen sind beide Wege zur Weitervermittlung der Verbindung gleichberechtigt möglich.

Mit der erhaltenen globalen Sicht des Netzes ist die Vorhersage der Wegewahl für eine Verbindung zwischen zwei Stimulatoren bzw. zwischen zwei bestimmten Vermittlungsknoten möglich. Ebenso kann aus der globalen Sicht die Topologie des Netzes abgeleitet werden. Für die Bestimmung des Weges zwischen zwei Vermittlungsknoten $N_q$ (Quelle) und $N_z$ (Ziel) wird der Ausdruck

$$\langle (N_z, N_z)|D\,{}^*|(N_q, N_z)\rangle N_q$$

gebildet und vereinfacht, wobei die Matrix D * definiert ist als

$$D\,{}^* = 1 + D + D^2 + D^3 + ...$$

Die sich durch diesen Berechnungsvorgang ergebende formale Sprache enthält als ihre Worte die möglichen Routen von $N_q$ nach $N_z$, wobei die einzelnen Routen den Weg jeweils in umgekehrter Richtung angeben, da in der Quantentheorie die Leserichtung von rechts nach links" gilt, was sich auch in er Wirkung der Operatoren niederschlägt.

Wenn z.B. ein Weg vom Stimulator ST4 zum Stimulator ST1 gesucht wird, dann sind aufgrund der Routinglisten der Vermittlungsknoten die Wege

$$4>F>D>A>1$$

und

$$4>F>D>E>B>A>1$$

möglich. Diese Routen ergeben sich durch Berechnung des Ausdruckes

$$
\begin{aligned}
\langle (1,1)|D\,{}^*|(4,1)\rangle 4 &= \langle (1,1)|D\,{}^*F|(F,1)\rangle 4 \\
&= \langle (1,1)|D\,{}^*|(F,1)\rangle F4 \\
&= \langle (1,1)|D\,{}^*|(D,1)\rangle DF4 \\
&= \langle (1,1)|D\,{}^*|(A,1)\rangle ADF4 + \langle (1,1)|D\,{}^*|(E,1)\rangle EDF4
\end{aligned}
$$

$$= \langle(1,1)|1|(1,1)\rangle 1 ADF4 + \langle(1,1)|D^{*}|(B,1)\rangle BEDF4$$
$$= \langle(1,1)|(1,1)\rangle 1 ADF4 + \langle(1,1)|D^{*}|(A,1)\rangle ABEDF4$$
$$= 1\,1\,ADF4 + \langle(1,1)|1|(1,1)\rangle 1 ABEDF4$$
$$= 1 ADF4 + 1 ABEDF4.$$

Die Voraussage beschränkt sich auf die Angabe, dass zwei Verbindungswege möglich sind. Es kann jedoch Aussage darüber gemacht werden, welcher der beiden Wege jeweils tatsächlich benützt wird. Hierzu wären entsprechende weitere Beobachtungen nötig, um daraus abzuleiten, mit welcher Wahrscheinlichkeit einer der beiden Wege jeweils benützt wird. Mit geringfügigen Anpassungen (Benutzung von Paaren aus Häufigkeit bzw. Wahrscheinlichkeit und Wort anstelle von Worten einer formalen Sprache, geeignete Definition der Konkatenation zweier solcherart gewichteter Worte) sind aber auch solche Beobachtungen für das hier verwendbare Verfahren verwendbar.

Im zuvor beschriebenen Beispiel wird das Verhalten des Netzes bei der Wegesuche ermittelt. Die Anwendung des Grundgedankens des vorgeschlagenen Verfahrens kann jedoch ausgeweitet und zur Ermittlung des Gesamtverhaltens eines Netzes eingesetzt werden. Das Gesamtverhalten würde jedes Verhalten des Netzes in jeder beim Betrieb des Netzes möglichen Situation umfassen. Jedes denkbare interessierende Verhalten eines Netzes ist beschreib- oder formalisierbar, wobei auch statistische Informationen (wie die erwähnte Wahrscheinlichkeit für die Auswahl eines bestimmten Weges) oder Timing-Informationen (wie z.B. mittlere Vermittlungszeiten in Vermittlungsknoten oder mittlere Übertragungszeiten zwischen Vermittlungsknoten) berücksichtigt werden können. Je mehr Eigenschaften beobachtet werden, desto umfassender und aussagekräftiger wird das aus der globalen Sicht erzeugbare Modell, mit dem dann realitätsnahe Simulationen des Netzes durchgeführt werden können. Die Auswahl der Parameter ist im wesentlichen abhängig vom Einsatzgebiet, von der Art des Netzes und von den Möglichkeiten der Stimulatoren und Beobachter.

Für Simulationen auf der Grundlage der globalen Sicht kann beispielsweise ein Programm vorgesehen werden, das ausgehend von den Routing-Tabellen die Wege im Netz Schritt für Schritt aufbaut, wie dies auch bei einem normalen Verbindungsaufbau geschieht.

Aus der globalen Sicht lassen sich auch weitere besondere Stimulierungsaufträge ermitteln, beispielsweise zur Verifikation von Fehlverhalten des Netzes. Ein solcher Stimulierungsauftrag dient dann dazu, versuchsweise bestimmte Verbindungen über einen als fehlerhaft vermuteten Vermittlungsknoten aufzubauen und aus den dabei gemachten Beobachtungen eindeutige Aussagen darüber zu gewinnen, ob der betreffende Vermittlungsknoten tatsächlich nicht richtig funktioniert.

Für die Generierung der globalen Sicht aus den beobachteten lokalen Sichten der einzelnen Stimulatoren (und Beobachter) ist es vorteilhaft, wenn diese von einem weiteren Netzwerk adressierbar sind und über dieses Netzwerk ein Datentransfer, d.h. die Beobachtungen an eine zentrale Stelle erfolgt.

Mit einem Editor aus der lokalen und/oder der globalen Sicht gewonnene Daten können ferner zur Anzeige (Visualisierung) der Struktur eines Netzes verwendet werden. Damit erhält das Bedienpersonal in einer Betriebsleitzentrale einen Überblick über die Struktur des Netzes.

Aus einer solchen Betriebsleitzentrale können ferner an die Stimulatoren Aufträge vergeben werden, um bestimmte Verbindungsversuche herzustellen, um das Verhalten bei kritischen Zuständen des Netzes näher zu untersuchen, z.B. Überlast oder spontane kurze Unterbrechung der Verbindung zwischen zwei Vermittlungsknoten.

Die Anwendung des erfindungsgemässen Verfahrens ist nicht auf verbindungsorientierte Fernmeldenetze beschränkt. Dieses Verfahren kann auch in Netzen mit paketorientierter Vermittlung eingesetzt werden, wobei die bekannten Werkzeuge "ping" und "tracert" mit benutzt werden können.

Es lässt sich grundsätzlich auf beliebige Netzstrukturen anwenden, für die ein Abbild mit den Eigenschaften des betreffenden Netzes erstellt werden soll. Je nach verwendetem Übertragungsverfahren und verwendetem Protokoll sind die Stimulatoren und Beobachter an einzelnen Knoten von aussen anzuschliessen oder als SW-Werkzeuge in einen Knoten zu integrieren.

**Literaturliste**

[1] WO 97/20419 — Method of Determining the topology of a network of objects. International publication date 5 June 1997.

[2] Heinrich Mitter — Quantentheorie; Bibliographisches Institut 1973.

[3] Günther Hotz; Klaus Estenfeld — Formale Sprachen, Bibliographisches Institut 1981.

[4] Peter Bocker — ISDN - Digitale Netze für Sprach-, Text-, Daten-, Video- und Multimediakommunikation, Springer Verlag, Berlin 1997, vierte Auflage

**Patentansprüche**

1. Verfahren zum Ermitteln von Daten zum Erstellen des Abbildes eines Netzes, das miteinander verbundene Vermittlungsknoten (A, ..., F; V) aufweist, wobei einzelnen Vermittlungsknoten (A, C, D, F) ein Stimulator (ST1, ST2, ..., ST_I, ST_II, ... ) zugeordnet ist, der eine Verbindung zu einem Teilnehmer innerhalb des Netzwerkes initiieren kann und wobei einzelnen Vermittlungsknoten Beobachter (ST1, ST2, ..., OBS_I, OBS_II. ... ) zugeordnet sind, die die am zugeordneten Vermittlungsknoten vermittelten Verbindungen beobachten und aufzeichnen können, **dadurch gekennzeichnet,** dass die an einem Vermittlungsknoten von einem Beobachter (ST1, ST2, ..., OBS_I, OBS_II ... ) aufgezeichneten Verbindungsdaten zu einer lokalen Sicht des Netzes zusammengefasst werden und dass aus den lokalen Sichten der einzelnen Beobachter (ST1, ST2, ..., OBS_I, OBS_II. ...) eine globale Sicht des Netzes generiert wird um daraus ein Abbild des Netzes zu erstellen.

2. Verfahren nach Anspruch 1, **dadurch gekennzeichnet,** dass Stimulator (ST1, ST2, ... , ST_II) und Beobachter (ST1, ST2, ...ST_II, OBS_II , ... ) als eine Einheit an einem Vermittlungsknoten (V) ausgebildet sind.

3. Verfahren nach Anspruch 1 oder 2, **dadurch gekennzeichnet,** dass für die Verbindungen zwischen den Vermittlungsknoten das Signalisiersystem Nr. 7 verwendet wird.

4. Verfahren nach einem der Ansprüche 1 bis 3, **dadurch gekennzeichnet,** dass von den Beobachtern (ST1, ST2, ..., OBS_I, OBS_II ... ) nur solche initiierte Verbindungen aufgezeichnet werden, die ein einem Stimulator (ST1, ST2, ..., ST_I, ST_II, ... ) zugewiesenes oder von einem Stimulator (ST1, ST2, ...,ST_I, ST_II, ...) erzeugtes Kennzeichen aufweisen.

5. Verfahren nach einem der Ansprüche 1 bis 4, **dadurch gekennzeichnet,** dass die Häufigkeit der an einem Vermittlungsknoten aufgezeichneten und über die gleichen Vermittlungsknoten verlaufenden Verbindungen registriert und in einer Dichtematrix ($D_1$, $D_2$, $D_3$ und $D_4$) abgespeichert wird.

6. Verfahren nach Anspruch 5, **dadurch gekennzeichnet,** dass die globale Sicht des Netzes aus der Addition

$$D := D_1 + D_2 + D_3 + D_4$$

von Dichtematrizen generiert wird.

7. Verfahren nach Anspruch 5, **dadurch gekennzeichnet,** dass die Beobachter (ST1, ST2, ..., OBS_I, OBS_II ... ) weitere Eigenschaften, insbesondere Dauer des Verbindungsaufbaus, Dauer der Übertragungszeit von Verbindungsversuchen und Verbindungswegen aufzeichnen und diese Eigenschaften in Matrizen abspeichern.

8. Verfahren nach einem der Ansprüche 1 bis 7, **dadurch gekennzeichnet,** dass von einer Betriebsleitstelle Verbindungen zu den Stimulatoren (ST1, ST2, ...,ST_I, ST_II, ...) und Beobachtern (ST1, ST2, ..., OBS_I, OBS_II ... ) geschaltet werden und die Stimulatoren (ST1, ST2, ...,ST_I, ST_II, ... ) mit Aufträgen zu bestimmten Verbindungsversuchen versehen werden und dass die von den Beobachtern (ST1, ST2, ..., OBS_I, OBS_II ... ) aufgezeichneten Verbindungsdaten an diese Betriebsleitstelle übertragen werden.

9. Verfahren nach Anspruch 8, **dadurch gekennzeichnet,** dass von einer Betriebsleitstelle über ein zweites, vom beobachteten Netz unabhängiges Netz Verbindungen zu den Stimulatoren (ST1, ST2, ...,ST_I, ST_II, ... ) und Beobachtern (ST1, ST2, ..., OBS_I, OBS_II ... ) geschaltet werden.

10. Anwendung des Verfahrens nach einem der Ansprüche 1 bis 9 in einem Fernmeldenetz mit Vermittlungsstellen, um auf einem durch das generierte Abbild erzeugten Modell durch Simulation das Netzverhalten zu untersuchen und um eine Vorhersage für das Routingverhalten von einzelnen Vermittlungsstellen zu erstellen.

System

Beobachtung

Lokale Sichten

Lokale Sichten
zusammenfass.

Globale Sicht

Vorhersage
Routing

Generierung
Modell

Vermittl. Wege

Simulator

Fig. 1

ST1  A  D  ST2

B  E

ST3  C  F  ST4

Fig. 2

ST1  A  D  ST2

B  E

ST3  C  F  ST4

Fig. 3

Fig. 4

Fig. 5

Fig. 6

Fig. 7

Fig. 8

**Europäisches Patentamt**

## EUROPÄISCHER RECHERCHENBERICHT

Nummer der Anmeldung

EP 99 81 0649

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 97 20419 A (DAWES NICHOLAS ;LORAN NETWORK SYSTEMS L L C (US)) 5. Juni 1997 (1997-06-05) | 1,2,8,10 | H04L12/24 H04L12/26 H04L12/56 |
| Y | * Zusammenfassung * | 3,5 | |
| A | * Abbildungen 1,4 * * Seite 2, Zeile 25 - Seite 4, Zeile 22 * * Seite 45, Zeile 29 - Seite 46, Zeile 18 * * Seite 50, Zeile 18 - Seite 53, Zeile 24 * * Ansprüche 1,8,9 * | 4,6,7,9 | |
| Y | US 5 598 532 A (LIRON MOSHE) 28. Januar 1997 (1997-01-28) | 5 | |
| A | * Zusammenfassung * * Abbildungen 3,6,7 * * Spalte 3, Zeile 1-53 * * Spalte 10, Zeile 1-46 * * Ansprüche 1,10,17 * | 1,2,8,10 | |
| Y | WO 95 32571 A (NOKIA TELECOMMUNICATIONS OY ;HAVANSI KLAUS (FI)) 30. November 1995 (1995-11-30) | 3 | RECHERCHIERTE SACHGEBIETE (Int.Cl.7) H04L |
| A | * Zusammenfassung * * Seite 1, Zeile 4-18 * * Seite 2, Zeile 16 - Seite 5, Zeile 26 * * Abbildungen 1,2 * * Anspruch 1 * | 1,10 | |
| A | US 5 450 408 A (PHAAL PETER) 12. September 1995 (1995-09-12) * Zusammenfassung * * Abbildungen 1,3,6,14 * * Spalte 1, Zeile 63 - Spalte 2, Zeile 64 * * Ansprüche 1-3 * | 1,2,5,8,10 | |

-/--

Der vorliegende Recherchenbericht wurde für alle Patentansprüche erstellt

| Recherchenort | Abschlußdatum der Recherche | Prüfer |
|---|---|---|
| DEN HAAG | 9. September 1999 | Cichra, M |

**Europäisches Patentamt**

## EUROPÄISCHER RECHERCHENBERICHT

Nummer der Anmeldung

EP 99 81 0649

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WO 96 13108 A (CABLETRON SYSTEMS INC) 2. Mai 1996 (1996-05-02) * Zusammenfassung * * Seite 19, Zeile 1 - Seite 20, Zeile 9 * * Seite 27, Zeile 1 - Seite 28, letzte letzte * * Ansprüche 1,11 * | 1,2,8,10 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| DEN HAAG | 9. September 1999 | Cichra, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 99 81 0649

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-09-1999

| Im Recherchenbericht angeführtes Patentdokument | Datum der Veröffentlichung | Mitglied(er) der Patentfamilie | Datum der Veröffentlichung |
|---|---|---|---|
| WO 9720419 A | 05-06-1997 | US 5926462 A | 20-07-1999 |
| | | US 5933416 A | 03-08-1999 |
| | | AU 7557996 A | 05-06-1997 |
| | | AU 7558096 A | 05-06-1997 |
| | | AU 7558196 A | 19-06-1997 |
| | | CA 2190425 A | 17-05-1997 |
| | | CA 2190426 A | 17-05-1997 |
| | | CA 2190433 A | 17-05-1997 |
| | | WO 9718658 A | 22-05-1997 |
| | | WO 9718659 A | 22-05-1997 |
| | | EP 0861545 A | 02-09-1998 |
| | | EP 0861546 A | 02-09-1998 |
| | | EP 0861543 A | 02-09-1999 |
| US 5598532 A | 28-01-1997 | KEINE | |
| WO 9532571 A | 30-11-1995 | FI 944362 A,B, | 25-11-1995 |
| | | AU 686812 B | 12-02-1998 |
| | | AU 2567595 A | 18-12-1995 |
| | | CN 1149368 A | 07-05-1997 |
| | | EP 0761054 A | 12-03-1995 |
| | | JP 10500267 T | 06-01-1998 |
| | | US 5930236 A | 27-07-1999 |
| US 5450408 A | 12-09-1995 | EP 0477448 A | 01-04-1992 |
| | | CA 2044874 A | 29-03-1992 |
| | | DE 69020899 D | 17-08-1995 |
| | | DE 69020899 T | 07-12-1995 |
| | | DE 69122200 D | 24-10-1996 |
| | | DE 69122200 T | 30-01-1997 |
| | | EP 0480555 A | 15-04-1992 |
| | | WO 9206547 A | 16-04-1992 |
| | | JP 4263536 A | 18-09-1992 |
| | | JP 5502566 T | 28-04-1993 |
| | | US 5315580 A | 24-05-1994 |
| WO 9613108 A | 02-05-1996 | US 5675741 A | 07-10-1997 |
| | | AU 3814295 A | 15-05-1996 |
| | | EP 0788699 A | 13-08-1997 |

EPO FORM P0461

Für nähere Einzelheiten zu diesem Anhang : siehe Amtsblatt des Europäischen Patentamts, Nr.12/82